Europäisches Patentamt

European Patent Office

Office européen des brevets

(11) Publication number: 0 373 814
A1

## EUROPEAN PATENT APPLICATION

(21) Application number: 89312654.0

(22) Date of filing: 05.12.89

(51) Int. Cl.⁵: F16K 7/12, B05B 1/30

(30) Priority: 15.12.88 GB 8829419

(43) Date of publication of application:
20.06.90 Bulletin 90/25

(84) Designated Contracting States:
AT BE CH DE ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Alder, Malcolm Ronald
11, Littlestead Close Caversham Park Village
Reading Berkshire RG4 0AU(GB)
Inventor: Boughtflower, Charles Arthur
Copper Beech Marlow Road Bourne End
Bucks SL8 5NU(GB)

(74) Representative: Ricks, Michael James et al
Imperial Chemical Industries PLC Legal
Department: Patents PO Box 6 Bessemer
Road
Welwyn Garden City Herts, AL7 1HD(GB)

(54) Diaphragm valve.

(57) A diaphragm valve comprising a valve body (1) and valve actuator means (18, 19, 23), said valve body (1) having an inlet opening (2) and an outlet opening (3) and being divided by an inner partition (16) into two flow chambers (13, 14), said chambers communicating via an aperture (15) in the partition (16), said aperture (15) defining a valve seat on which a diaphragm (11) acts to close the aperture, characterised in that the partition (16) and valve seat are positioned substantially in the plane of the axis of fluid flow from the inlet opening (2) to the outlet opening (3).

FIG.1.

## DIAPHRAGM VALVE

The present invention relates to fluid control diaphragm valves, for use in, for example, spraying systems and which are particularly useful in pesticide application systems.

Conventional hand-held spraying systems used for applying pesticides comprise an elongate support member with a spraying head at one end and a handle, motor and fluid supply unit at the other end. The pesticide is supplied under the action of gravity to the spraying head. The size of the droplets and the area over which the fluid is ejected is determined by the rate of rotation of the atomising disc. By controlling the voltage applied to the motor, the rate of rotation of the disc can be adjusted. The flow rate is adjusted by inserting a 'fitting' into a socket in the spray head which physically restricts the diameter of the fluid supply tube. The fluid supply is controlled by a simple on/off tap. The tap is a manually operated lever which simply cuts off the fluid passageway by inserting a block on a spindle. The passage is opened when the block is removed but the spindle remains in the passageway and fluid is forced to move around this barrier. The spindle disrupts the flow of fluid creating eddies and turbulence. In some cases, depending on the rheological properties of the fluids, this causes a thixotropic reaction, i.e. thickening of the fluid, making it harder to spray evenly.

The disadvantages of the system described above can be overcome by incorporation of an on/off diaphragm valve on or near the handle. In the course of experimentation it was found that conventional diaphragm valves are unsuitable for this application. Conventional diaphragm valves usually provide a barrier to fluid flow which usually takes the form of a partition extending from one side of the passage and forming a valve seat against which the diaphragm is pushed to form a seal to the passage of the fluid. It has been recognised in the art that this type of valve can also be disruptive to fluid flow and attempts have been made to provide diaphragm valves without such a barrier to fluid flow. The second disadvantage to conventional diaphragm valves is the size, in particular the conventional valve actuating systems are bulky and cannot readily be adapted for use in a hand-held pesticide spraying system.

According to the present invention there is provided a diaphragm valve comprising a valve body and valve actuator means, said valve body having an inlet opening and an outlet opening and being divided by an inner partition into two flow chambers, an inlet flow chamber and an outlet flow chamber, said chambers communicating via an aperture in the partition, said aperture defining a valve seat on which a diaphragm acts to close the aperture, characterised in that the partition and valve seat are positioned substantially in the plane of the axis of fluid flow from the inlet opening to the outlet opening.

The valve body can be made of any sort of nylon, polypropylene or polymer plastic. Especially preferred material for the valve body is nylon. The diaphragm is made of any material which does not swell or shrink and maintains its elasticity. Especially preferred material for the diaphragm is polyvinylchloride (PVC).

The valve body is preferably made in three portions, a valve housing, a cap and a valve base. This facilitates assembly of the valve body around the diaphragm and the valve actuator means. The valve body is preferably disc shaped i.e., having a depth which is relatively small compared to the diameter. The flow chambers are preferably formed one above the other, i.e. stacked. The partition between the flow chambers is substantially in the plane of the fluid flow and is preferably slightly inclined to the horizontal such that the sloping roof and circular shape of the inlet flow chamber directs the fluid through the aperture into the outlet flow chamber where again the sloping floor and circular shape of the outlet flow chamber directs the fluid flow into the outlet opening. In this way, the fluid is directed such that no barrier is presented to fluid flow until the diaphragm is actuated. The circular shape of flow chambers prevents the fluid getting 'caught' for example, in corners between a partition and side of the valve body, and keeps the fluid flow regular and continuous. This is a particular advantage of this system.

The valve actuator means is preferably a spring housed in the aperture and acting on the base of the diaphragm to urge it away from the valve seat into the open position, and a spindle with an enlarged head which is threaded through the diaphragm, such that when the head is depressed the diaphragm is urged into engagement with the valve seat, against the biasing action of the spring, into the closed position.

According to a preferred embodiment of the invention there is provided a diaphragm valve comprising a valve body having an inlet opening and an outlet opening, said valve body being divided by an inner partition into two flow chambers, an inlet flow chamber between the partition and the inlet opening, and an outlet flow chamber between the partition and the outlet opening, said chambers communicating via an aperture in said partition; said aperture defining a valve seat, such that the partition and valve seat are positioned substantially in the plane of the axis of fluid flow, a cap detachably secured to the valve body, a diaphragm secured between the cap and the valve body and a valve actuator for moving the diaphragm into engagement with the valve seat to close the valve and a spring located in the aperture biasing the diaphragm away from the valve seat to open the valve.

The invention also extends to a spray application system incorporating the diaphragm valve as described herein and more particularly to a hand-held pesticide application system incorporating such a fluid flow restrictor assembly. Accordingly there is provided a hand-held pesticide application system comprising an elongate support member provided with a spraying head at one end and a handle at the other, a fluid supply system and a motor unit, the fluid supply system consisting of a reservoir of fluid and a flexible tube supplying fluid to the spraying head, and having diaphragm valve situated between the spraying head and the handle, the diaphragm valve comprising a valve body and valve actuator means, said valve body having an inlet opening and an outlet opening and being divided by an inner partition into two flow chambers, said chambers communicating via an aperture in the partition, said aperture defining a valve seat on which a diaphragm acts to close the aperture, characterised in that the partition and valve seat are positioned substantially in the plane of the axis of fluid flow from the inlet opening to the outlet opening.

The pesticide application system is particularly useful with formulations which have a viscosity in the range of 15 to 25 x $10^{-6}$ m²/s (centistokes) at 20°C for example, a preferred viscosity is 20 x $10^{-6}$ m²/s (centistokes) at 20°C.

Such formulations are preferably aqueous or aqueous based emulsions. Examples of particularly useful pesticides are herbicides and plant growth regulators. Especially preferred examples of herbicide formulations are, Bullseye *, (active ingredients: aminotriazole, atrazine), Snapper (active ingredients: aminotriazole, atrazine, 2,4-D), and Verdone * (active ingredients: 2,4-D, mecoprop).
Especially preferred examples of plant growth regulator formulations are Holdfast * (active ingredients: paclobutrazol), Holdfast D (active ingredients: paclobutrazol and dicamba), and the mixture of paclobutrazol and mefluidlide.

The embodiment of the present invention will now be more particularly described, by way of example, with reference to the accompanying drawings in which:

Figure 1 is a cross section of the diaphragm valve in the open position.

Figure 2 is a plan view of the top of the cap of the diaphragm valve.

Figure 3 is a perspective view of the diaphragm valve.

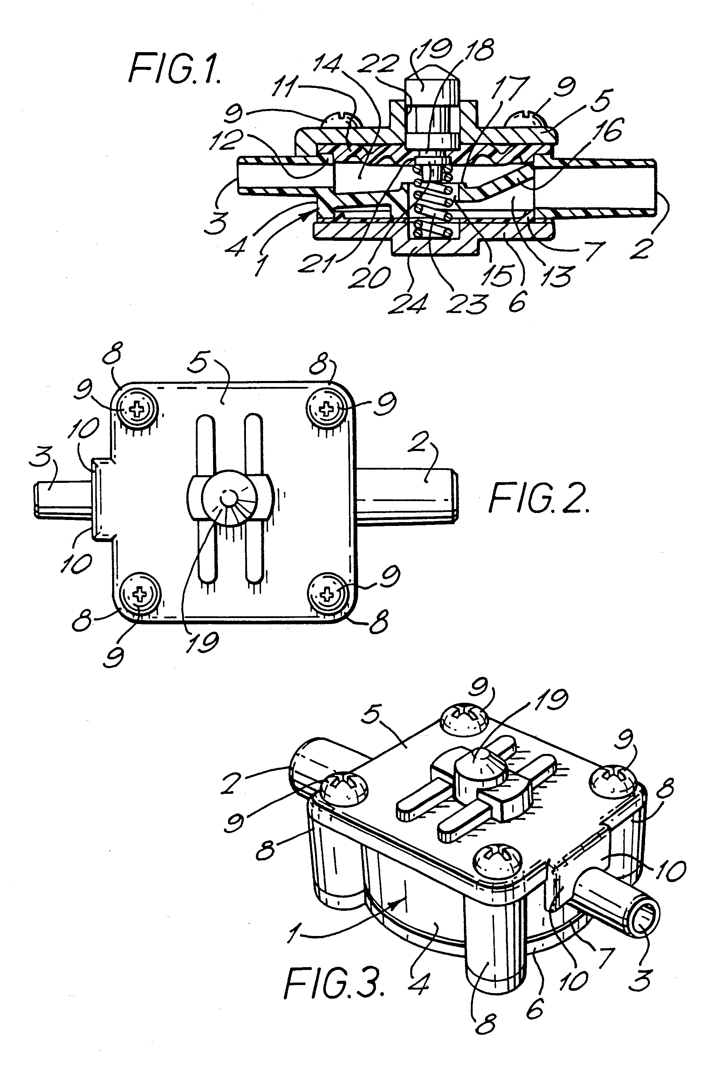

In the embodiment of the present invention, a diaphragm valve as shown in Figures 1, 2 and 3 consists of a substantially circular valve body 1 with an inlet opening 2 and an outlet opening 3. The valve body 1 is formed in three parts, a circular valve housing 4, a square cap 5, and a substantially circular base 6. A gasket 7 is sandwiched between the base 6 and the valve housing 4 providing a seal. The cap 5 rests on top of four channels 8 equally spaced around the outside of the valve housing 4. There are four locating screws 9, one at each corner of the cap 5 which locate in the channels 8, thereby securing the cap 5 to the top of the valve housing 4. The cap 5 is further provided with locating arms 10 extending over the top of the outlet opening 3. A diaphragm 11 rests on the rim 12 of the valve housing 4 between the channels 8 and is secured in position by the cap 5 which is attached over the diaphragm 11 on to the valve body 1. The inlet opening 2 leads to an inlet flow chamber 13. The inlet flow chamber 13 in turn leads to an outlet flow chamber 14 by way of an aperture 15 in a partition 16 which separates the flow chambers. The outlet flow chamber 14 further leads to the outlet opening 3. The ceiling of the outlet flow chamber 14 is formed by the diaphragm 11. The inlet opening 2 is elongated and slightly tapered to engage with tubing supplying fluids to the inlet flow chamber 13 and is larger than the outlet opening 3. The outlet opening 3 is also elongated and slightly tapered to engage with tubing removing fluids from the outlet flow chamber 14. The partition 16, which forms the ceiling of the inlet flow chamber, is inclined across the valve housing 4 from the upper wall of the inlet opening 2 to the lower wall of the outlet opening 3, such that inlet fluid flow is directed by the inclined flow chamber through the valve seat. The aperture 15 in the partition 16 has a slightly raised border 17 projecting into the outlet flow chamber 14, which provides a valve seat for the diaphragm 11. The diaphragm 11 is circular and exactly fits with the upper rim of the valve housing 4. The diaphragm 11 is formed in a series of annular rings of varying thickness. The diaphragm 11 is operated by a valve actuator which consists of a spindle 18 with an enlarged head 19 and a flange 20. The spindle 18 is threaded through a hole 21 in the diaphragm 11 such that the diaphragm 11 abuts the head 19 of the spindle 18 and co-operates with the flange 20 to hold the diaphragm 11 securely on the spindle 18. The cap 5 has an opening 22 through which

* Registered    Trade    Mark

the head 19 of the spindle 18 is located when the cap 5 is placed on the valve housing 4. This enables the cap 5 to sit over the diaphragm 11 on the rim of the valve body. A spring 23 is located in the aperture 15 extending from a depression 24 in the base 6 of the valve body 1 up through the inlet flow chamber 13 and aperture 15 into the outlet chamber 14 and is biased against the flange 20 on the spindle 18. When the head 19 of the spindle 18 is depressed the diaphragm 11 is extended to engage the valve seat and close off the flow of fluid from the inlet flow chamber 13 to the outlet flow chamber 14. When the head 19 of the spindle 18 is released the diaphragm 11 is urged away from the valve seat by virtue of its elasticity and the spring 23 acting on the flange 20 to bias the spindle 18 and diaphragm 11 away from the valve seat, thereby allowing free and unrestricted flow or fluid through the valve body 1.

## Claims

1. A diaphragm valve comprising a valve body (1) and valve actuator means (18, 19, 23), said valve body (1) having an inlet opening (2) and an outlet opening (3) and being divided by an inner partition (16) into two flow chambers (13, 14), said chambers communicating via an aperture (15) in the partition (16), said aperture (15) defining a valve seat on which a diaphragm (11) acts to close the aperture, characterised in that the partition (16) and valve seat are positioned substantially in the plane of the axis of fluid flow from the inlet opening (2) to the outlet opening (3).

2. A diaphragm valve according to claim 1 further characterised in that the valve body (1) is disc shaped.

3. A diaphragm valve according to claim 2 further characterised in that the partition (16) between the flow chambers is inclined across the valve body (1), such that inlet fluid flow is directed by the inclined inlet flow chamber (13) through the valve seat.

4. A diaphragm valve according to claim 2 or 3 in which the flow chambers (13, 14) are vertically arranged one above the other in the valve body (1).

5. A diaphragm valve according to any of the preceding claims which is further characterised in that the valve actuator means (18, 19, 23) are housed substantially within the valve body (1).

6. A diaphragm valve according to claim 5 wherein the valve actuator means (18, 19, 23) comprise a spring (23) extending from the inlet flow chamber (13) to the outlet flow chamber (14) through the valve seat and acting on the diaphragm to bias the valve into an open position and a spindle (18) threaded through the diaphragm, such that when the head (19) is depressed the diaphragm is urged into engagement with the valve seat, against the biasing action of the spring (23), into the closed position.

7. A diaphragm valve according to any of the preceding claims comprising a valve body (1) having an inlet opening (2) and an outlet opening (3), said valve body (1) being divided by an inner partition (16) into two flow chambers (13,14), an inlet flow chamber (13) between the partition (16) and the inlet opening (2), and an outlet flow chamber (14) between the partition (16) and the outlet opening (3) said flow chambers (13, 14) communicating via an aperture (15) in said partition (16), said aperture (15) defining a valve seat, such that the partition (16) and valve seat are positioned substantially in the plane of the axis of fluid flow, a cap (5) detachably secured to the valve body (1), a diaphragm (11) secured between the cap (5) and the valve body (1) and a valve actuator (18, 19) for moving the diaphragm (11) into engagement with the valve seat to close the valve and a spring (23) located in the aperture (15) biasing the diaphragm (11) away from the valve seat to open the valve.

8. A spray application system incorporating the valve of claim 1.

9. A hand-held pesticide application system comprising an elongate support member provided with a spraying head at one end and a handle at the other, a fluid supply system and a motor unit, the fluid supply system consisting of a reservoir of fluid and a flexible tube supplying fluid to the spraying head, and having a diaphragm valve situated between the spraying head and the handle, the diaphragm valve comprising a valve body (1) and valve actuator means (18, 19, 23), said valve body (1) having an inlet opening (2) and an outlet opening (3) and being divided by an inner partition (16), said aperture (15) defining a valve seat on which a diaphragm (11) acts to close the aperture (15), characterised in that the partition (16) and valve seat are positioned substantially in the plane of the axis of fluid flow from the inlet opening (2) to the outlet opening.

10. A method of regulating the passage of fluid in a spray application system according to claims 8 or 9.

11. A diaphragm valve substantially as herein described with reference to the drawings.

FIG.1.

FIG.2.

FIG.3.

## DOCUMENTS CONSIDERED TO BE RELEVANT

EP 89312654.0

| Category | Citation of document with indication, where appropriate, of relevant passages | Relevant to claim | CLASSIFICATION OF THE APPLICATION (Int. Cl.⤫5) |
|---|---|---|---|
| Y | <u>US - A - 4 280 680</u><br>(PAYNE)<br>    * Fig. 1,3,5 and belonging<br>      text * | 1,4,5 | F 16 K   7/12<br>B 05 B   1/30 |
| A | * Fig. 1,4,5 and belonging<br>  text * | 3,7 | |
| Y | <u>DE - A1 - 2 738 779</u><br>(H.GROSS)<br>    * Page 7, line 5 - page 8,<br>      line 17; fig. 2 * | 1,4,5 | |
| A | * Page 7, line 5 - page 8,<br>  line 17; fig. 2 * | 2 | |
| A | <u>DE - C - 56 284</u><br>(H.SEYDEL)<br>    * Fig. 4 * | 1,4,5,<br>7 | |
| A | <u>US - A - 4 375 882</u><br>(SCHREIBER, JR.)<br>    * Fig. 4-6 * | 1,2,5 | |
| A | <u>GB - A - 1 425 015</u><br>(THE LUCAS ELECTRICAL COMP.<br>LTD.)<br>    * Totality *<br>            ---- | 4-6 | TECHNICAL FIELDS<br>SEARCHED (Int. Cl.⤫5)<br><br>F 16 K   7/00<br>F 16 K   2/00<br>F 16 K  31/00<br>B 05 B   1/00<br>A 01 M   7/00<br>E 02 M  37/00 |

The present search report has been drawn up for all claims

| Place of search | Date of completion of the search | Examiner |
|---|---|---|
| VIENNA | 05-02-1990 | ROUSSARIAN |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
                       
& : member of the same patent family, corresponding
    document

EPO Form 1503. 03.82